# EUROPEAN PATENT APPLICATION

(11) **EP 3 629 280 A1**
(43) Date of publication of application: **01.04.2020**
(21) Application number: 18214995.5
(22) Date of filing: 21.12.2018
(51) Int. Cl.: G06Q 30/02

(54) **RECOMMENDATION METHOD AND REALITY PRESENTING DEVICE**

(30) Priority: 25.09.2018 US 201816141938
(71) Applicant: XRSpace CO., LTD., Taoyuan City 330 (TW)
(72) Inventor: Chou, Peter, 100 Taipei City (TW); Che, Chih-Heng, 105 Taipei City (TW); Wu, Chia-Wei, 231 New Taipei City (TW)
(74) Representative: Straus, Alexander

(57) **Abstract**

A recommendation method (40) applied in a reality presenting device (10) is disclosed. The reality presenting device (10) includes a first sensing module (12), a second sensing module (14) and a processing unit (16). The recommendation method (40) includes: the first sensing module sensing (12) a user-related information (UR) corresponding to a user who wears the reality presenting device (10)(402); the second sensing module (14) sensing an environment-related information (EN) corresponding to an environment which the user experiences (404); and the processing unit (16) generating and presenting a recommended object (RO) to the user according to the user-related information (UR) or the environment-related information (EN) (406).

## Description

### Field of the Invention

The present disclosure relates to a recommendation method and a reality presenting device, and more particularly, to a recommendation method and a reality presenting device capable of properly pushing advertisement based on the environment and the user reaction.

### Background of the Invention

With the advancement and development of technology, the demand of interactions between a computer and a user is increased. Human-computer interaction technology, e.g. somatosensory games, virtual reality (VR) environment, augmented environment (AR), mixed reality (MR) environment and extended reality (XR) environment, becomes popular because of its physiological and entertaining function. Meanwhile, advertisement is an effective way to promote commercial products to consumers. Therefore, how to pushing advertisement in an AR/VR/MR/EX environment is a significant objective in the field.

### Summary of the Invention

This in mind, the application aims at providing a recommendation method and a reality presenting device capable of properly pushing advertisement based on the environment and the user reaction.

This is achieved by a recommendation method and a reality presenting device according to claims 1 and 2. The dependent claims pertain to corresponding further developments and improvements.

As will be seen more clearly from the detailed description following below, an embodiment of the present disclosure discloses a recommendation method, applied in a reality presenting device, wherein the reality presenting device comprises a first sensing module, a second sensing module and a processing unit, the recommendation method comprising: the first sensing module sensing a user-related information corresponding to a user who wears the reality presenting device; the second sensing module sensing an environment-related information corresponding to an environment which the user experiences; and the processing unit generating and presenting a recommended object to the user according to the user-related information or the environment-related information.

An embodiment of the present disclosure discloses a reality presenting device, comprising: a first sensing module, configured to sense a user-related information corresponding to a user who wears the reality presenting device; a second sensing module, configured to sense an environment-related information corresponding to an environment which the user experiences; and a processing unit, configured to generate and present a recommended object to the user according to the user-related information or the environment-related information.

### Brief Description of the Drawings

FIG. 1 is a functional block diagram of a reality presenting device according to an embodiment of the present disclosure.
FIG. 2 is an appearance diagram of the reality presenting device of FIG. 1.
FIG. 3 is a schematic diagram of a scenario of a user wearing a reality presenting device in a room.
FIG. 4 is a schematic diagram of a process according to an embodiment of the present disclosure.

### Detailed Description

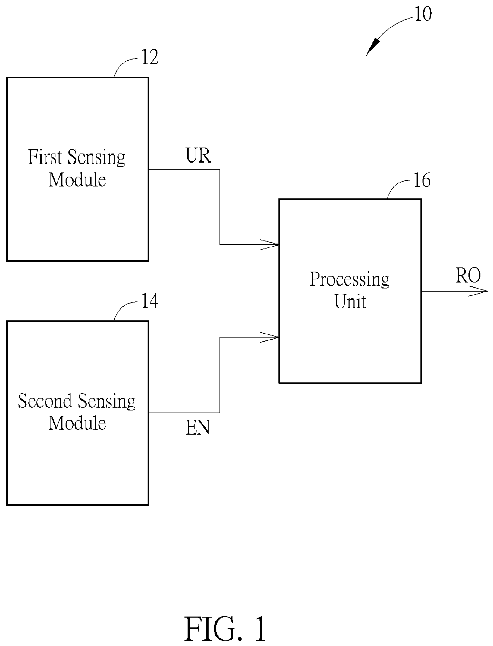

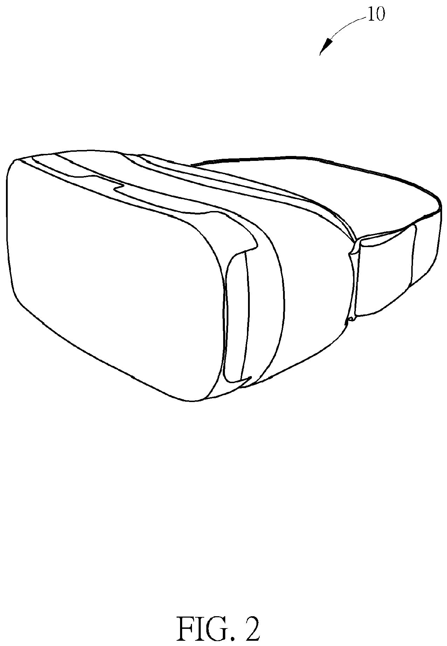

FIG. 1 is a functional block diagram of a reality presenting device 10 according to an embodiment of the present disclosure. FIG. 2 is an appearance diagram of the reality presenting device 10. The reality presenting device 10 may be a virtual reality (VR) device, an augmented reality (AR) device, a mixed reality (MR) device, or an extended reality (XR) device. The reality presenting device 10 comprises a first sensing module 12, a second sensing module 14, and a processing unit 16. The first sensing module 12 is configured to sense a user-related information UR corresponding to a user who wears the reality presenting device 10. The second sensing module 14 is configured to sense an environment-related information EN corresponding to an environment which the user experiences, wherein the environment (which the user experiences) may be a real environment, a virtual environment or a combination/mixture of them. The processing unit 16, coupled to the first sensing module 12 and the second sensing module 14, is configured to generate and present a recommended object RO to the user according to the user-related information UR and/or the environment-related information EN. The recommended object RO may be a visual object or an audible sound generated for the user. In an embodiment, the recommended object RO may be an advertisement of a commercial product, visually or audibly, but not limited thereto.

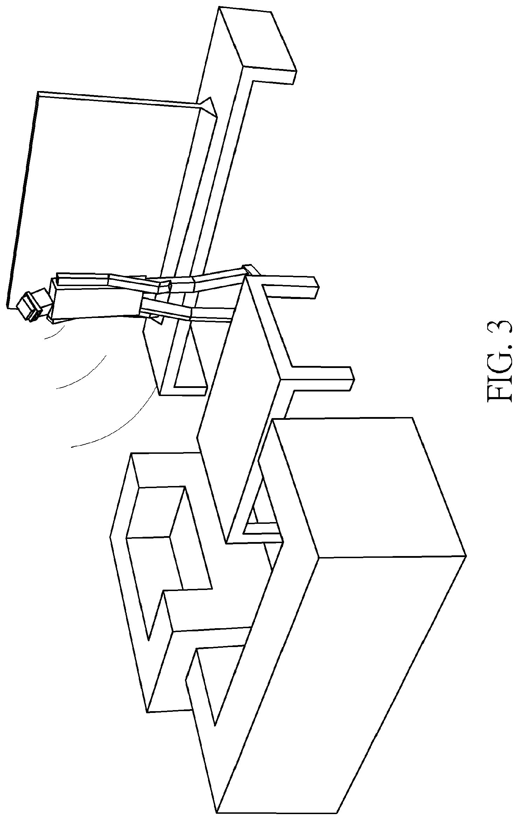

For example, FIG. 3 is a schematic diagram of a scenario of the user wearing the reality presenting device 10 in a room. When the user wearing the reality presenting device 10 stays in a specific room, e.g., a living room as FIG. 3 shows, the second sensing module 14 may firstly collect/gather the environment-related information corresponding to the environment which the user experiences. For example, the second sensing module 14 may take picture(s) of the environment, and the picture of the environment taken by the second sensing module 14 is a form/type of the environment-related information. Secondly, the second sensing module 14 or the processing unit 16 may recognize or identify an environment type of the specific room using some artificial intelligence (AI) algorithm according to the environment-related information, e.g., the picture(s) of the environment. For example, the second sensing module 14 or the processing unit 16 may recognize/identify the room the user stays in, illustrated in FIG. 3, is a living room, and generate the environment type information indicating that the environment is a living room. In an embodiment, the user may walk around the specific room such that the second sensing module 14 may collect sufficient data, i.e., the pictures or the environment-related information, for the second sensing module 14 or the processing unit 16 to perform better judgment. In the meantime, the first sensing module 12 may observe the response/reaction of the user, e.g., facial expression, tone in speech, and the like, using some big data technology, to guess/conjecture the interest of the user, especially when staying in the environment or the specific room. Finally, the processing unit 16 may promote a recommended object RO via, e.g., a multimedia interface (not shown in FIG. 1 and FIG. 2) of the reality presenting device 10, to the user, according to the user-related information UR and/or the environment-related information EN. Hence, the user might obtain more interested information and may have better user experience. For the case of the recommended object RO being an advertisement, the advertisement is successfully pushed.

Furthermore, in an embodiment, the first sensing module 12 and the processing unit 16 may work together to infer whether the user likes the recommended object RO. If not, the processing unit 16 may promote another recommended object RO. Through the interactions between the user and the reality presenting device 10, and/or the learning process executed by the processing unit 16, it can be envisioned that the processing unit 16 may promote the best recommended object RO which the user likes it. In advertising point of view, the advertisement is successfully pushed.

In addition, the environment type may also be kitchen, dining room, bedroom, library, exhibition hall, restaurant, concert hall, conference room, gymnasium, stadium, hospital, school, shopping mall, railway station, airport, marketplace, etc., and not limited thereto.

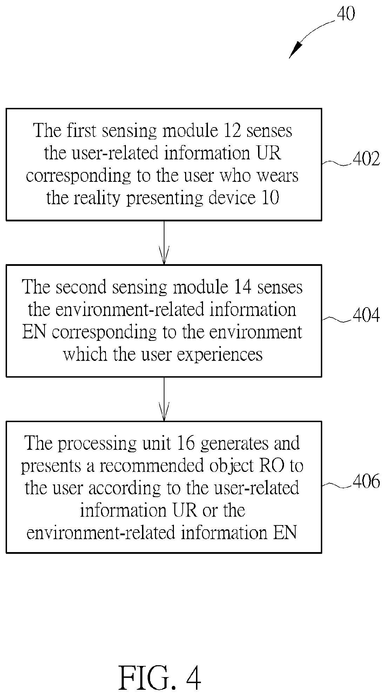

Operations of the reality presenting device 10 may be summarized into a process 40 as shown in FIG. 4. The process 40 comprises the following steps:
Step 402: The first sensing module 12 senses the user-related information UR corresponding to the user who wears the reality presenting device 10.
Step 404: The second sensing module 14 senses the environment-related information EN corresponding to the environment which the user experiences.
Step 406: The processing unit 16 generates and presents a recommended object RO to the user according to the user-related information UR or the environment-related information EN.

In an embodiment, the first sensing module 12 may comprise an eyeball tracking sub-module, and the eyeball tracking sub-module may perform an eyeball tracking operation on the user's eyes and generate an eyeball tracking result corresponding to the user. In this case, the user-related information UR comprises the eyeball tracking result. The first sensing module 12 or the processing unit 16 may determine an attention-drawing spot information according to the eyeball tracking result. The processing unit 16 may generate the recommended object RO according to the attention-drawing spot information and the environment-related information EN.

Specifically, according to the eyeball tracking result, the reality presenting device 10 would obtain information of a location of a spot at which the user stares for a certain period of time. It can be implied that the spot at which the user stares draws the user's attention and the spot is called as the attention-drawing spot. The location of the attention-drawing spot, called as the attention-drawing spot information, may be in terms coordinates of the spot within a picture or a video frame displayed by the reality presenting device 10. By incorporating the attention-drawing spot information into the environment or the environment-related information EN, the processing unit 16 may promote the recommended object RO.

For example, the user wearing the reality presenting device 10 may stay in a living room. When the reality presenting device 10 acknowledged that the user stares at an empty wall of the living room via the first sensing module 12, through the process 40, the processing unit 16 may promote a virtual painting or a poster hung on the wall as the recommended object RO.

In an embodiment, the first sensing module 12 may comprise a face scanning sub-module, and the face scanning sub-module may perform a face scanning operation on the user's face and generate a face scanning result corresponding to the user. In this case, the user-related information UR comprises the face scanning result. The first sensing module 12 or the processing unit 16 may determine an emotion information according to the face scanning result. The processing unit 16 may generate the recommended object RO according to the emotion information.

For example, the face scanning result may be a picture of a part of the face or a picture of the whole face. The first sensing module 12 or the processing unit 16 may determine an emotion of the user and generate the emotion information according to the face scanning result. The first sensing module 12 or the processing unit 16 may determine that the emotion of the user is happy, surprised, upset, anxious, etc., by using some AI and big data algorithms, which is known and not narrated herein. Based on the emotion information, the processing unit 16 may promote the proper recommended object RO.

In an embodiment, the first sensing module 12 may comprise a tone sensing sub-module, and the tone sensing sub-module 122 may perform a tone sensing operation on the user's speech tone and generate a tone sensing result corresponding to the user. In this case, the user-related information UR comprises the tone sensing result. The first sensing module 12 or the processing unit 16 may determine a tone information according to the tone sensing result. The processing unit 16 may generate the recommended object RO according to the tone information.

For example, the tone sensing sub-module may comprise a microphone and the tone sensing result may be a recording of the user's speech. The first sensing module 12 or the processing unit 16 may determine the tone information indicating that the user is excited or disappointed. Moreover, the first sensing module 12 may recognize the speech content, such as "WOW! This is awesome" or "Nope, I don't like this", by using existing speech recognition algorithm(s), and generate the tone information including the speech recognition result. Based on the tone information, the processing unit 16 may promote the recommended object RO.

In summary, the present disclosure utilizes the user-related information and the environment-related information to promote the recommended object, so as to enhance the user experience. In addition, advertisement may be successfully pushed based on the environment and the user reaction.

## Claims

1. A recommendation method (40), applied in a reality presenting device, wherein the reality presenting device comprises a first sensing module (12), a second sensing module (14) and a processing unit (16), the recommendation method **characterized by** comprising:
the first sensing module (12) sensing a user-related information (UR) corresponding to a user who wears the reality presenting device (10)(402);
the second sensing module (14) sensing an environment-related information (EN) corresponding to an environment which the user experiences (404); and
the processing unit (16) generating and presenting a recommended object (RO) to the user according to the user-related information (UR) or the environment-related information (EN) (406).

2. A reality presenting device (10), **characterized by**, comprising:
a first sensing module (12), configured to sense a user-related information (UR) corresponding to a user who wears the reality presenting device (10) (402);
a second sensing module (14), configured to sense an environment-related information (EN) corresponding to an environment which the user experiences (404); and
a processing unit (16), configured to generate and present a recommended object to the user according to the user-related information (UR) or the environment-related information (EN) (406).

3. The recommendation method (40) of claim 1 or the reality presenting device (10) of claim 2, **characterized in that**, the reality presenting device is a virtual reality device, an augmented reality device, a mixed reality device or an extended reality device.

4. The recommendation method (40) of claim 1 or the reality presenting device (10) of claim 2, **characterized by**, further comprising:
the first sensing module (12) performing an eyeball tracking operation on eyes of the user and obtaining an eyeball tracking result corresponding to the user, wherein the user-related information (UR) comprises the eyeball tracking result;
the first sensing module (12) or the processing unit (16) determining an attention-drawing spot information according to the eyeball tracking result; and
the processing unit (16) generating the recommended object according to the attention-drawing spot information.

5. The recommendation method (40) of claim 1 or the reality presenting device (10) of claim 2, **characterized by**, further comprising:
the first sensing module (12) performing a face scanning operation on a face of the user and obtaining a face scanning result corresponding to the user, wherein the user-related information (UR) comprises the face scanning result;
the first sensing module (12) or the processing unit (16) determining an emotion information according to the face scanning result; and
the processing unit (16) generating the recommended object according to the emotion information.

6. The recommendation method (40) of claim 1 or the reality presenting device (10) of claim 2, **characterized by,** further comprising:
the first sensing module (12) performing a tone sensing operation on the user and obtaining a tone sensing result, wherein the user-related information (UR) comprises the tone sensing result;
the first sensing module (12) or the processing unit (16) determining a tone information according to the tone sensing result; and
the processing unit (16) generating the recommended object according to the tone information.

7. The recommendation method (40) of claim 1 or the reality presenting device (10) of claim 2, **characterized by**, further comprising:
the second sensing module (14) or the processing unit (16) identifying an environment type information of the environment according to the environment-related information (EN); and
the processing unit (16) generating the recommended object according to the environment type information.

8. The recommendation method (40) of claim 1 or the reality presenting device (10) of claim 2, **characterized in that**, the recommended object is an advertisement of a commercial product.

9. The recommendation method (40) of claim 1 or the reality presenting device (10) of claim 2, **characterized in that**, the environment which the user experiences comprises a real environment, a virtual environment or a combination/mixture of them.
